(19) Europäisches Patentamt
European Patent Office
Office européen des brevets

(11) Veröffentlichungsnummer : **0 201 868**
**B1**

(12) # EUROPÄISCHE PATENTSCHRIFT

(45) Veröffentlichungstag der Patentschrift : **01.02.89**

(51) Int. Cl.⁴ : **C 09 B 62/09**, C 09 B 62/513, D 06 P 1/38

(21) Anmeldenummer : **86106277.6**

(22) Anmeldetag : **07.05.86**

(54) **Wasserlösliche Disazoverbindungen, Verfahren zu deren Herstellung und ihre Verwendung als Farbstoffe.**

(30) Priorität : **15.05.85 DE 3517547**

(43) Veröffentlichungstag der Anmeldung : **20.11.86 Patentblatt 86/47**

(45) Bekanntmachung des Hinweises auf die Patenterteilung : **01.02.89 Patentblatt 89/05**

(84) Benannte Vertragsstaaten : **CH DE FR GB IT LI**

(56) Entgegenhaltungen :
**EP-A- 0 048 355**
**DE-B- 1 179 317**
**GB-A- 1 013 442**

(73) Patentinhaber : **HOECHST AKTIENGESELLSCHAFT**
**Postfach 80 03 20**
**D-6230 Frankfurt am Main 80 (DE)**

(72) Erfinder : **Segal, Marcos, Dr.**
**Berliner Strasse 10**
**D-6238 Hofheim am Taunus (DE)**
Erfinder : **Kunze, Michael, Dr.**
**Platanenweg la**
**D-6238 Hofheim am Taunus (DE)**

**EP 0 201 868 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem technischen Gebiet der faserreaktiven Farbstoffe.

Aus der europäischen Patentanmeldungs-Veröffentlichung Nr. 0 094 020A sind als faserreaktive Farbstoffe geeignete Disazoverbindungen bekannt, die aus der 1-Amino-8-naphthol-3,6- oder -4,6-disulfonsäure als bivalenter Kupplungskomponente, einer auf dieser sauer angekuppelten Phenylendiamino-sulfonsäure-Verbindung als erster Diazokomponente, an deren zweiter Aminogruppe ein mit einem faserreaktiven Anilinrest der Vinylsulfonreihe verbundener Halogentriazinylrest gebunden ist, und einer Anilin- oder Aminonaphthalinverbindung als zweiter Diazokomponente aufgebaut sind. Der an den Halogentriazinrest gebundene faserreaktive Anilinrest enthält keinen Nitro- oder Phenylamino- oder nitrosubstituierten Phenylaminorest.

Mit der vorliegenden Erfindung wurden neue wertvolle wasserlösliche Disazoverbindungen gefunden, die der allgemeinen Formel (1)

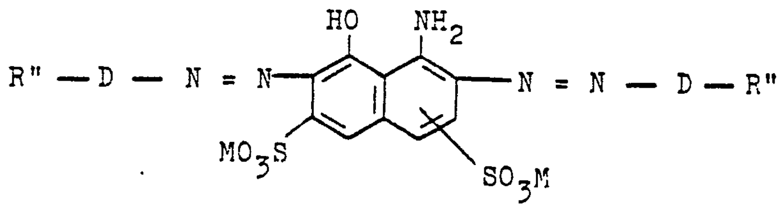

(1)

entsprechen. In dieser Formel bedeuten :

M ist das Äquivalent eines Erdalkalimetalls, wie des Calciums, bevorzugt jedoch ein Wasserstoffatom oder insbesondere ein Alkalimetall, wie Natrium, Kalium oder Lithium ;

R″ ist ein Wasserstoffatom oder ein Rest der allgemeinen Formel (2)

$$Y{-}SO_2{-} \qquad (2)$$

in welcher

Y die Vinylgruppe oder eine β-Thiosulfatoethyl-, β-Phosphatoethyl-, β-Chlorethyl- oder bevorzugt eine β-Sulfatoethyl-Gruppe ist,

oder

R″ ist ein Rest Z der nachstehend angegebenen und definierten allgemeinen Formel (3), wobei beide R″ zueinander gleiche oder voneinander verschiedene Bedeutungen besitzen können, jedoch mindestens eines der beiden R″ zwingend eine Gruppe der allgemeinen Formel (3) ist ;

Z ist ein Rest der allgemeinen Formel (3)

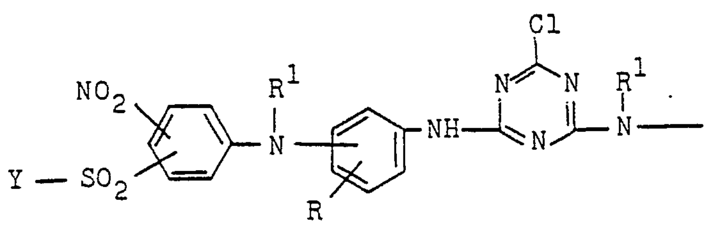

(3)

in welcher

die Nitrogruppe und die Gruppe $-SO_2-Y$ zueinander bevorzugt meta-ständig an den Benzolkern gebunden sind und nicht gleichzeitig ortho-ständig zur Aminogruppe $-NR^1-$ stehen,

$R^1$ für ein Wasserstoffatom oder eine gegebenenfalls substituierte Alkylgruppe von 1 bis 4 C-Atomen steht, wobei beide $R^1$ zueinander gleiche oder voneinander verschiedene Bedeutungen besitzen können,

R ein Wasserstoffatom oder eine Sulfogruppe bedeutet und

Y die Vinylgruppe oder eine β-Thiosulfatoethyl-, β-Phosphatoethyl-, β-Chlorethyl- oder bevorzugt eine β-Sulfatoethyl-Gruppe ist,

wobei die Gruppen Y in Formeln (2) und (3) zueinander gleiche oder voneinander verschiedene Bedeutungen besitzen können ;

D bedeutet zusammen mit R″ gleich einem Wasserstoffatom einen Phenylrest, der durch Substituenten, bevorzugt 1 oder 2 Substituenten, substituiert sein kann, die der Gruppe der Substituenten Alkyl von 1 bis 4 C-Atomen, wie Methyl und Ethyl, Alkoxy von 1 bis 4 C-Atomen, wie Methoxy und Ethoxy, Carboxy, Alkanoylamino von 2 bis 5 C-Atomen, hiervon bevorzugt Acetylamino, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenyl-sulfamoyl, N-Phenyl-N-($C_1$-$C_4$-alkyl)-sulfamoyl, Cyan, Nitro, Chlor, Brom, Fluor, Trifluormethyl, Hydroxy und Sulfo angehören, oder

D bedeutet zusammen mit R″ = H einen Naphthylrest, der durch Substituenten, wie 1, 2 oder 3 Substituenten, substituiert sein kann, die der Gruppe der Substituenten Sulfo, Carboxy, Methyl, Ethyl, Methoxy, Ethoxy, Alkanoylamino von 2 bis 5 C-Atomen, Benzoylamino, Chlor, Hydroxy und Nitro angehören, oder

D ist im Falle, daß R″ für eine Gruppe der allgemeinen Formel (2) steht, ein Phenylenrest, der durch 1 oder 2 Substituenten substituiert sein kann, die der Gruppe Alkyl von 1 bis 4 C-Atomen, wie Methyl und Ethyl, Alkoxy von 1 bis 4 C-Atomen, wie Methoxy und Ethoxy, Carboxy, Chlor, Brom, Fluor, Trifluormethyl und Sulfo angehören, oder ist ein Naphthylenrest, der durch 1 oder 2 Sulfogruppen substituiert sein kann, oder

D ist im Falle, daß R″ eine Gruppe der allgemeinen Formel (3) bedeutet, ein Phenylenrest, der durch 1 oder 2 Substituenten substituiert sein kann, die der Gruppe der Substituenten Alkyl von 1 bis 4 C-Atomen, wie Methyl und Ethyl, Alkoxy von 1 bis 4 C-Atomen, wie Methoxy und Ethoxy, Chlor und Sulfo angehören.

Sofern R″ eine Gruppe der allgemeinen Formel (2) ist, ist D bevorzugt ein Phenylenrest, der durch 1 oder 2 Substituenten substituiert sein kann, die aus der Gruppe von 2 Alkyl von 1 bis 4 C-Atomen, 2 Alkoxy von 1 bis 4 C-Atomen, 2 Chlor, 1 Brom, 1 Sulfo und 1 Carboxy ausgewählt sind, oder ein Naphthylenrest, der durch keine weiteren Substituenten oder durch 1 oder 2 Sulfogruppen substituiert ist.

Sofern R″ ein Rest Z der allgemeinen Formel (3) ist, ist D ein Phenylenrest, der bevorzugt durch keine weiteren Substituenten substituiert ist oder durch 1 Alkylgruppe von 1 bis 4 C-Atomen, 1 Alkoxygruppe von 1 bis 4 C-Atomen oder durch 1 oder 2 Sulfogruppen, bevorzugt durch 1 Sulfogruppe, substituiert ist.

Insbesondere bevorzugt ist jedoch im Falle, daß R″ einen Rest Z bedeutet, der Formelrest R″—D— (bzw. —D—R″) ein Rest der Formel (4a), (4b), (4c), (4d) oder (4e)

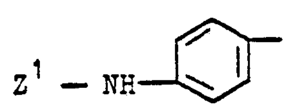
(4a)

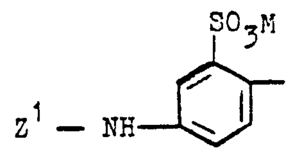
(4b)

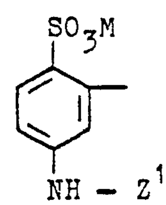
(4c)

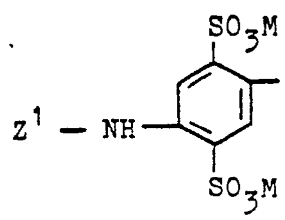
(4d)

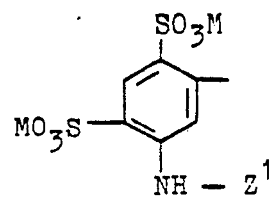
(4e)

in welchen M die obengenannte Bedeutung besitzt und $Z^1$ einen faserreaktiven Rest der allgemeinen Formel (3a)

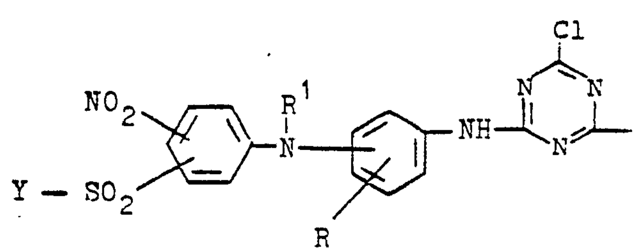
(3a)

in welcher R, $R^1$ und Y die obengenannten Bedeutungen haben, darstellt.

Sofern R″ ein Rest der allgemeinen Formel (2) oder (3) ist, steht der Rest (2) bzw. (3) bevorzugt in meta- oder para-Stellung zur Azogruppe.

Alkylgruppen von 1 bis 4 C-Atomen, die substituiert sind, sind beispielsweise solche, die durch einen oder zwei, bevorzugt einen, Substituenten aus der Gruppe Acetylamino, Hydroxy, Sulfato, Alkoxy von 1 bis 4 C-Atomen, Sulfo und Carboxy substituiert sind.

Bevorzugt sind die Formelreste $R^1$ ein Wasserstoffatom oder eine Alkylgruppe von 1 bis 4 C-Atomen, wie insbesondere die Methyl- oder Ethylgruppe.

Eine Sulfogruppe ist eine Gruppe entsprechend der allgemeinen Formel $—SO_3M$, eine Carboxygruppe eine Gruppe entsprechend der allgemeinen Formel —COOM, eine Thiosulfagruppe eine Gruppe entsprechend der allgemeinen Formel $—S—SO_3M$, eine Phosphatogruppe eine Gruppe entsprechend

der allgemeinen Formel $-OPO_3M_2$ und eine Sulfatogruppe eine Gruppe entsprechend der allgemeinen Formel $-OSO_3M$, wobei M die obengenannte, insbesondere bevorzugte Bedeutung besitzt.

Die erfindungsgemäßen Azoverbindungen können in Form ihrer freien Säure und bevorzugt in Form ihrer Salze, insbesondere neutralen Salze, vorliegen ; als Salze sind insbesondere die Alkalimetallsalze zu nennen. Die neuen Verbindungen finden bevorzugt in Form dieser Salze ihre Verwendung zum Färben und Bedrucken von hydroxy- und/oder carbonamidgruppenhaltigem Fasermaterial.

Die vorliegende Erfindung betrifft weiterhin ein Verfahren zur Herstellung der Disazoverbindungen der allgemeinen Formel (1). Dieses ist dadurch gekennzeichnet, daß man eine Diazoniumverbindung eines Amins der allgemeinen Formel (5)

$$H_2N—D—R'' \qquad (5)$$

in welcher D und R″ die obengenannten Bedeutungen haben, mit 1-Amino-3,6-disulfo-8-hydroxy-naphthalin oder 1-Amino-4,6-disulfo-8-hydroxy-naphthalin in äquimolaren oder praktisch äquimolaren Mengen bei einem pH-Wert zwischen 0 und 3,5 kuppelt und die so gebildete Monoazoverbindung anschließend mit einer weiteren Diazoniumverbindung eines Amins der oben genannten und definierten allgemeinen Formel (5) in äquimolarer oder praktisch äquimolarer Menge bei einem pH-Wert zwischen 4,5 bis 7,5, bevorzugt 5 bis 7, kuppelt, wobei mindestens eines der beiden eingesetzten Diazoniumsalze der Amine (5) gemäß der Definition der Disazoverbindungen der allgemeinen Formel (1) eine Gruppe der allgemeinen Formel (3) zwingend enthält. Sofern die beiden R″ identisch zueinander sind, d. h. einen Rest Z darstellen, kann das Diazoniumsalz dieses Amins (5) auch zur Kupplungskomponente in zweifach äquimolarer Menge zugesetzt und die Kupplungsreaktion in zwei aufeinanderfolgenden Schnitten durchgeführt werden : die erste Kupplung erfolgt in stark saurem Bereich und die zweite Kupplung nach Zugabe einer hierzu üblichen säurebindenden Verbindung im schwach sauren bis neutralen Bereich.

Die erfindungsgemäße Herstellung der Disazoverbindungen der allgemeinen Formel (1) erfolgt in wäßrig-organischem, bevorzugt in wäßrigem Medium. Sofern ein organisches Lösemittel zugegen ist, ist dies ein mit Wasser mischbares Lösemittel, wie beispielsweise Aceton, Dioxan, Dimethylformamid, N-Methyl-piperidin und Caprolactam.

Die beiden Kupplungsreaktionen erfolgen in der Regel bei einer Reaktionstemperatur zwischen + 5 °C und + 25 °C.

Die Ausgangsverbindungen der allgemeinen Formel (5), in denen R″ für einen Rest Z der allgemeinen Formel (3) steht, somit Anilinverbindungen der allgemeinen Formel (5a)

$$H_2N—D—Z \qquad (5a)$$

lassen sich in an und für sich üblicher Weise aus entsprechenden Phenylendiamin-Verbindungen entsprechend der allgemeinen Formel (5b)

$$H_2N—D—NHR^1 \qquad (5b)$$

in welcher D einen Phenylenrest bedeutet, der durch 1 oder 2 Substituenten aus der Gruppe Alkyl von 1 bis 4 C-Atomen, Alkoxy von 1 bis 4 C-Atomen, Chlor und Sulfo substituiert sein kann, und $R^1$ die obengenannte Bedeutung besitzt, durch Umsetzung mit Cyanurchlorid und einer Nitro-aminodiphenylamin-Verbindung der allgemeinen Formel (6)

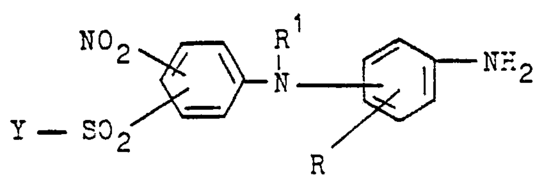

(6)

in welcher, R, $R^1$ und Y die obengenannten Bedeutungen haben, herstellen. So erfolgt beispielsweise die Synthese der Verbindungen der allgemeinen Formel (5a) durch Umsetzung einer Verbindung der allgemeinen Formel (5b) mit einer Dichlortriazinylamino-nitrodiphenylamin-Verbindung der allgemeinen Formel (7)

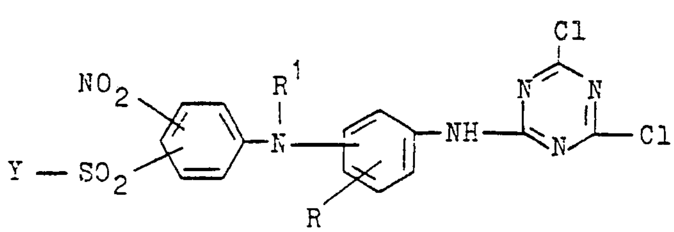

(7)

in welcher R, $R^1$ und Y die obengenannten Bedeutungen haben, in wäßrig-organischem oder bevorzugt wäßrigem Medium bei einer Temperatur zwischen 10 und 20 °C und bei einem pH-Wert zwischen 6 und 6,5.

Die Ausgangsverbindung der allgemeinen Formel (7) kann ebenfalls analog bekannten Verfahrensweisen durch Umsetzung von Cyanurchlorid mit einer Nitro-diphenylamin-Verbindung der obengenannten und definierten allgemeinen Formel (6) hergestellt werden, so beispielsweise in wäßrig-organischem Medium oder wäßrigem Medium bei einer Temperatur zwischen 5 und 15 °C und bei einem pH-Wert zwischen 3,5 und 4,5.

Sofern die oben erwähnten Kondensationsreaktionen zwischen den Aminoverbindungen und Cyanurchlorid oder einer Dichlortriazinylamino-Verbindung und einer Aminoverbindung in wäßrig-organischem Medium erfolgen, ist das anteilige organische Lösemittel bevorzugt Aceton, Dioxan und Dimethylformamid.

Eine der als Ausgangsverbindungen dienenden Amino-diphenylamin-Verbindungen der allgemeinen Formel (6) ist in Form ihrer β-Hydroxyethylsulfonyl-Vorstufe bekannt (s. Deutsche Auslegeschrift 1 179 317, Beispiel 5). Andere Amino-diphenylamin-Verbindungen der Formel (6) lassen sich über die β-Hydroxyethylsulfon-Vorstufe in analoger Weise mit Hilfe der entsprechenden isomeren Acylamino-anilin- und (β-Hydroxyethylsulfonyl)-nitro-chlorbenzol-Verbindungen leicht herstellen. So erhält man beispielsweise das 1-Nitro-4-(4'-aminophenylamino)-5-(β-sulfatoethylsulfonyl)-benzol durch Umsetzung von 1,4-Phenylendiamin und 2-Chlor-5-nitro-phenyl-(β-hydroxyethyl-sulfon in methanolischer Lösung bei einer Temperatur zwischen 50 und 70 °C innerhalb weniger Stunden, das sich aus der Reaktionslösung nach Abkühlen auf Raumtemperatur und Zugabe von Eiswasser kristallin in hoher Ausbeute abscheidet.

Aus diesen β-hydroxyethylsulfonyl-substituierten Aminodiphenylamin-Ausgangsverbindungen lassen sich die faserreaktiven Ausgangsverbindungen der allgemeinen Formel (6) in der für die Synthese von faserreaktiven Gruppen der Vinylsulfonreihe üblichen Weise synthetisieren. Bevorzugt werden sie zunächst in deren Sulfatoderivate durch Umsetzung mit einem Sulfatierungsmittel analog bekannten Verfahrensweisen, übergeführt. Sulfatierungsmittel sind bspw. Schwefelsäure oder Chlorsulfonsäure in einem organischen Lösemittel, wie Pyridin oder N-Methyl-pyrrolidon. Analoge Sulfatierungsreaktionen dieser Art sind beispielsweise aus der bereits genannten DE-AS 1 179 317 sowie aus der britischen Patentschrift Nr. 1 540 566 und der europäischen Patentanmeldungs-Veröffentlichung Nr. 0 036 383 bekannt. Bevorzugt erfolgt die Sulfatierung der β-Hydroxyethylsulfonyl-Ausgangsverbindung zur entsprechenden Verbindung der allgemeinen Formel (6), in welcher Y für die β-Sulfatoethyl-Gruppe steht, in 100 %iger Schwefelsäure bei Temperaturen zwischen 10 und 30 °C. Hieraus läßt sich die in Schwefelsäure lösliche Sulfatoverbindung nach Eintragen der Schwefelsäure-Lösung in Eiswasser isolieren.

In analoger Weise lassen sich die Verbindungen der allgemeinen Formel (6), in welchen Y für die β-Phosphatoethyl-Gruppe steht, durch Umsetzung mit einem geeigneten und hierfür üblichen Phosphatierungsmittel, wie Phosphorsäure oder Polyphosphorsäure, herstellen.

Aus den β-Sulfatoethylsulfonyl-Verbindungen der allgemeinen Formel (6) erhält man die entsprechenden Vinylsulfonyl-Verbindungen (mit Y gleich der Vinylgruppe in Formel (6)) durch Umsetzung mit einem Alkali in wäßriger Lösung, beispielsweise indem man eine Lösung der Sulfatoverbindung in alkalischwäßriger Lösung bei einem pH-Wert zwischen 8 und 10 und bei einer Temperatur zwischen etwa 40 und 60 °C für kurze Zeit behandelt.

Aus diesen Vinylsulfonyl-Verbindungen der allgemeinen Formel (6) lassen sich die entsprechenden β-Thiosulfatoethylsulfonyl-Verbindungen durch Umsetzung mit einem Alkalithiosulfat herstellen, so beispielsweise durch Umsetzung der Vinylsulfonyl-Verbindung der Formel (6) mit Natriumthiosulfat, vorteilhaft im Überschuß, wie in 21 bis 40 %igem Überschuß, in wäßriger schwach saurer Lösung bei einer Temperatur zwischen 30 und 80 °C.

Amino-diphenylamin-Ausgangsverbindungen der allgemeinen Formel (6) sind beispielsweise 1-Nitro-2-(4'-amino-phenylamino)-5-(β-sulfatoethylsulfonyl)-benzol, 1-Nitro-4-(4'-amino-phenylamino)-5-(β-sulfatoethylsulfonyl)-benzol, 1-Nitro-2-(3'-amino-phenylamino)-5-(β-sulfatoethylsulfonyl)-benzol, 1-Nitro-2-(4'-amino-3'-sulfo-phenylamino)-5-(β-sulfatoethylsulfonyl)-benzol und 1-Nitro-2-(4'-amino-2'-sulfo-phenylamino)-5-(β-sulfatoethylsulfonyl)-benzol.

Aromatische Amine der allgemeinen Formel (5b), die als Ausgangsverbindungen zur Herstellung der Diazokomponenten (5a) zur Synthese der erfindungsgemäßen Verbindungen dienen können, sind bspw. 1,4-Diamino-benzol, 1,3-Diamino-benzol, 1,4-Diamino-benzol-2-sulfonsäure, 1,3-Diamino-benzol-4-sulfonsäure, 1,4-Diamino-benzol-2,5-disulfonsäure, 1,3-Diamino-benzol-4,6-disulfonsäure, 1,4-Diamino-benzol-2,6-disulfonsäure, 1,4-Diamino-3-methyl-benzol, 1,3-Diamino-4-methoxy-benzol.

Aromatische Amine der allgemeinen Formel H—D—$NH_2$ bzw. Y—$SO_2$—D—$NH_2$, die als Diazokomponenten zur Synthese der erfindungsgemäßen Verbindungen dienen können, sind bspw. 1-Aminobenzol-2-sulfonsäure, 1-Aminobenzol-3- und -4-sulfonsäure, 2-Amino-4-sulfobenzoesäure, 2-Amino-5-sulfo-benzoesäure, 4-Amino-2-sulfo-benzoesäure, 4-Amino-toluol-2- und -3-sulfonsäure, 2-Amino-toluol-4- und -5-sulfonsäure, 2-Aminotoluol-4-carbonsäure, Anthranilsäure, 4-Amino-benzoesäure, 2-Amino-anisol-4- und -5-sulfonsäure, 4-Amino-anisol-2- und -3-sulfonsäure, 3-Chlor-2-amino-3-toluol-5-sulfonsäure, 4-Chlor-2-amino-toluol-5-sulfonsäure, 5-Chlor-2-aminotoluol-3- und -4-sulfonsäure, 6-Chlor-2-amino-toluol-4-sulfonsäure, 6-Chlor-3-amino-toluol-4-sulfonsäure, 1-Aminobenzol-2,5-disulfonsäure, 1-Aminobenzol-2,4-

und -3,5-disulfonsäure, 2-Amino-toluol-3,5-disulfonsäure, 2-Aminotoluol-4,5- und -4,6-disulfonsäure, 4-Amino-toluol-2,5-disulfonsäure, 2-Aminonaphthalin-1-sulfonsäure, 2-Aminonaphthalin-5- und -6-sulfonsäure, 2-Aminonaphthalin-7- und -8-sulfonsäure, 1-Aminonaphthalin-2-, -3-, -4-, -5-, -6-, -7- und -8-sulfonsäure, 2-Aminonaphthalin-4,8-disulfonsäure, 2-Aminonaphthalin-6,8-disulfonsäure, 2-Aminonaphthalin-1,5- und -1,7-disulfonsäure, 2-Aminonaphthalin-5,7-, -3,6-, -3,7- und -4,7-disulfonsäure, 1-Amino-naphthalin-2,4-, -2,5-, -3,6-, -3,7-, -3,8-, -4,6- -4,7-, -4,8-, -5,7- und -6,8-disulfonsäure, 2-Aminonaphthalin-3,6,8-trisulfonsäure, 2-Aminonaphthalin-4,6,8- und -1,5,7-trisulfonsäure, 1-Aminonaphthalin-2,4,7-trisulfonsäure, 1-Amino-naphthalin-2,4,8-, -3,5,7-, -3,6,8- und -4,6,8-trisulfonsäure, insbesondere 1-Amino-4-(β-sulfatoethylsulfonyl)-benzol, 1-Amino-3-(β-sulfatoethylsulfonyl)-benzol, 1-Amino-2-methoxy-5-(β-sulfatoethylsulfonyl)-benzol, 1-Amino-2-hydroxy-5-(β-sulfatoethylsulfonyl)-benzol, 1-Amino-2-hydroxy-4-(β-sulfatoethylsulfonyl)-benzol, 1-Amino-2-methyl-4-(β-sulfatoethylsulfonyl)-benzol, 1-Amino-2-methoxy-5-methyl-4-(β-sulfatoethylsulfonyl)-benzol, 1-Amino-2,5-dimethoxy-4-(β-sulfatoethylsulfonyl)-benzol, 1-Amino-2-methyl-5-methoxy-4-(β-sulfatoethylsulfonyl)-benzol, 2-Chlor-1-amino-5-(β-sulfatoethylsulfonyl)-benzol, 2-Sulfo-1-amino-5-(β-sulfatoethylsulfonyl)-benzol, 2-Carboxy-1-amino-5-(β-sulfatoethylsulfonyl)-benzol, 1-Amino-4-chlor-5-(β-sulfatoethylsulfonyl)-benzol, 1-Amino-2-brom-4-(β-sulfatoethylsulfonyl)-benzol, 1-Amino-2-(β-sulfatoethylsulfonyl)-benzol, 1-Amino-4-[3'-(β-sulfatoethylsulfonyl)-benzoylamino]-benzol, 2-Amino-1-sulfo-6-(β-sulfatoethylsulfonyl)-naphthalin, 2-Amino-6-sulfo-8-(β-sulfatoethylsulfonyl)-naphthalin, 1-Amino-6-sulfo-4-(β-sulfatoethylsulfonyl)-naphthalin, 1-Amino-7-sulfo-5-(β-sulfatoethylsulfonyl)-naphthalin, 1-Amino-4-sulfo-6-(β-sulfatoethylsulfonyl)-naphthalin, 1-Amino-4-sulfo-7-(β-sulfatoethylsulfonyl)-naphthalin, 2-Amino-1-sulfo-5-(β-sulfatoethylsulfonyl)-naphthalin, 2-Amino-1,7-disulfo-5-(β-sulfatoethylsulfonyl)-naphthalin, 2-Amino-8-sulfo-6-(β-sulfatoethylsulfonyl)-naphthalin, 1-Amino-4-(β-sulfatoethylsulfonyl)-naphthalin, 1-Amino-5-(β-sulfatoethylsulfonyl)-naphthalin, 1-Amino-6-(β-sulfatoethylsulfonyl)-naphthalin, 1-Amino-7-(β-sulfatoethylsulfonyl)-naphthalin, 2-Amino-5-(β-sulfatoethylsulfonyl)-naphthalin, 2-Amino-6-(β-sulfatoethylsulfonyl)-naphthalin, 2-Amino-7-(β-sulfatoethylsulfonyl)-naphthalin und 2-Amino-8-(β-sulfatoethylsulfonyl)-naphthalin sowie deren entsprechenden β-Thiosulfatoethylsulfonyl-, β-Phosphatoethylsulfonyl-, β-Chlor-ethylsulfonyl- und Vinylsulfonyl-Derivate.

Bevorzugte Disazoverbindungen der allgemeinen Formel (1) sind weiterhin solche, die einer der allgemeinen Formeln (8) bis (12)

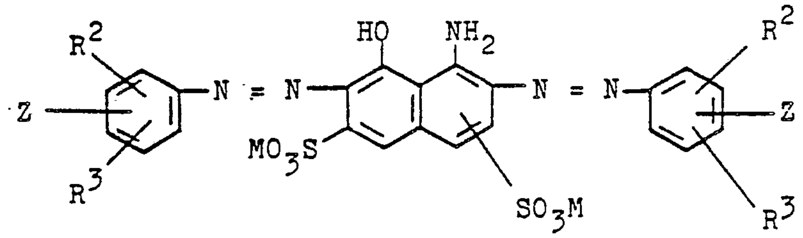

(8)

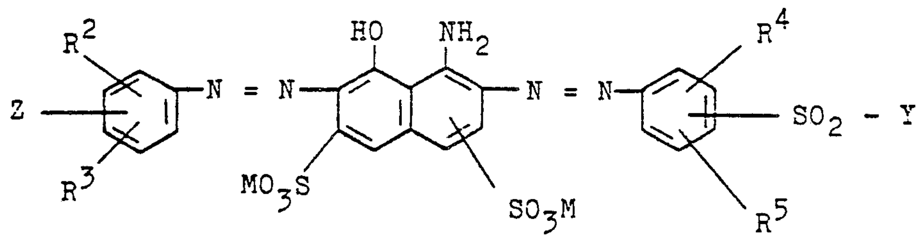

(9)

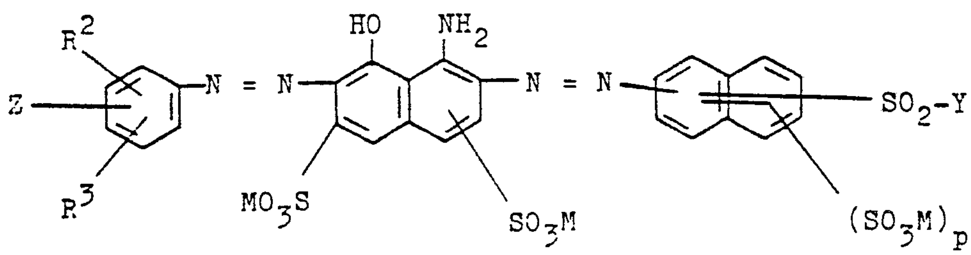

(10)

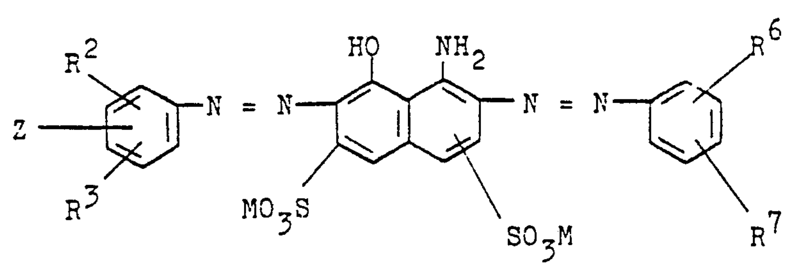

(11)

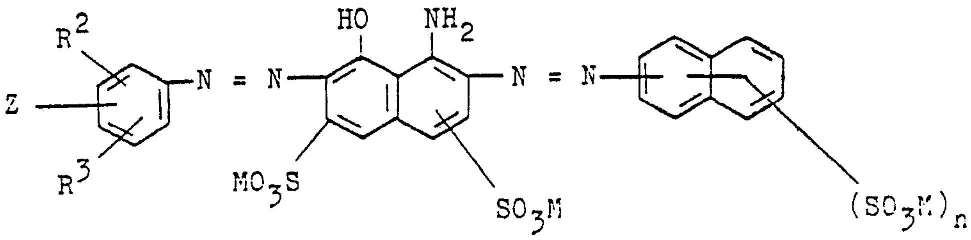

(12)

entsprechen, in welchen

M, Y und Z die obengenannten Bedeutungen haben,

$R^2$ ein Wasserstoffatom oder eine Sulfogruppe ist,

$R^3$ eine Alkylgruppe von 1 bis 4 C-Atomen, wie die Ethylgruppe und insbesondere die Methylgruppe, oder ein Chlor-atom, bevorzugt jedoch eine Sulfogruppe oder ein Wasserstoffatom ist,

$R^4$ ein Wasserstoffatom, eine Sulfogruppe, eine Carboxygruppe, ein Chloratom, ein Bromatom, eine Alkylgruppe von 1 bis 4 C-Atomen, wie die Ethylgruppe und insbesondere die Methylgruppe, oder eine Alkoxygruppe von 1 bis 4 C-Atomen, wie die Ethoxygruppe und insbesondere Methoxygruppe, ist,

$R^5$ ein Wasserstoffatom, eine Sulfogruppe, eine Alkylgruppe von 1 bis 4 C-Atomen, wie die Ethylgruppe und insbesondere die Methylgruppe, oder eine Alkoxygruppe, wie die Ethoxygruppe und insbesondere die Methoxygruppe, ist,

$R^6$ ein Wasserstoffatom, eine Sulfogruppe, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, eine Carboxygruppe, eine Alkanoylaminogruppe von 2 bis 5 C-Atomen, wie die Acetylaminogruppe, die Benzoylaminogruppe, eine Sulfobenzoylaminogruppe, die Phenylaminogruppe, eine Sulfophenylaminogruppe, die Carbamoylgruppe, eine durch Alkyl von 1 bis 4 C-Atomen mono- oder disubstituierte Carbamoylgruppe, die Sulfamoylgruppe, eine durch Alkyl von 1 bis 4 C-Atomen mono- oder disubstituierte Sulfamoylgruppe, die N-Phenylsulfamoylgruppe, eine N-Phenyl-N-($C_1$-$C_4$-alkyl)-sulfamoyl-Gruppe, die Cyan-, Nitro- oder Trifluormethylgruppe oder ein Chlor-, Brom- oder Fluoratom ist, insbesondere jedoch ein Wasserstoffatom, eine Sulfogruppe, eine Alkylgruppe von 1 bis 4 C-Atomen, eine Alkoxygruppe von 1 bis 4 C-Atomen, ein Bromatom, ein Chloratom, eine Nitrogruppe oder eine Carboxygruppe ist,

$R^7$ ein Wasserstoffatom, eine Sulfogruppe, eine Alkylgruppe von 1 bis 4 C-Atomen, wie die Ethylgruppe und insbesondere die Methylgruppe, oder eine Alkoxygruppe von 1 bis 4 C-Atomen, wie die Ethoxygruppe und insbesondere die Methoxygruppe, insbesondere jedoch bevorzugt eine Sulfogruppe ist,

p für die Zahl Null, 1 oder 2 steht und

n die Zahl 1, 2 oder 3 ist.

Von den Verbindungen der allgemeinen Formel (8) sind bevorzugt diejenigen, in denen jedes $R^2$ eine Sulfogruppe bedeutet, die in ortho-Stellung zur Azogruppe gebunden ist, und $R^3$ die genannte Bedeutung besitzt, bevorzugt jedoch ein Wasserstoffatom oder eine Sulfogruppe ist. Von den Verbindungen der allgemeinen Formel (9) sind bevorzugt diejenigen, in denen $R^2$ eine Sulfogruppe in ortho-Stellung zur Azogruppe ist, $R^3$ ein Wasserstoffatom bedeutet und Z mit der obengenannten Bedeutung in para-Stellung zur Sulfogruppe ($R^2$) steht, $R^4$ und $R^5$ beide ein Wasserstoffatom bedeuten und die Gruppe $-SO_2-Y$ in para-Stellung zur Azogruppe an den Benzolkern gebunden ist. Bevorzugt von den Verbindungen der allgemeinen Formel (10) sind insbesondere Verbindungen entsprechend der allgemeinen Formel (13)

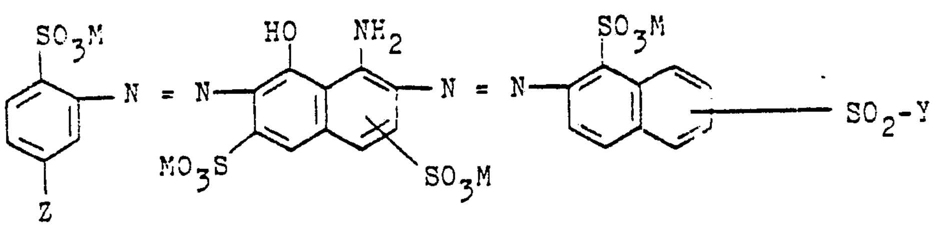

(13)

in welcher M, Z und Y die obengenannten Bedeutungen haben. Von den Verbindungen der allgemeinen Formel (11) sind insbesondere diejenigen bevorzugt, in welchen $R^2$ eine Sulfogruppe in ortho-Stellung zur Azogruppe ist, $R^3$ für ein Wasserstoffatom steht und Z mit der obengenannten Bedeutung in para-Stellung zur Sulfogruppe ($R^2$) an den Benzolkern gebunden ist, $R^6$ ein Wasserstoffatom bedeutet und $R^7$ eine Sulfogruppe in para-Stellung zur Azogruppe ist. Von den Verbindungen der allgemeinen Formel (12) sind insbesondere bevorzugt diejenigen, die der allgemeinen Formel (14)

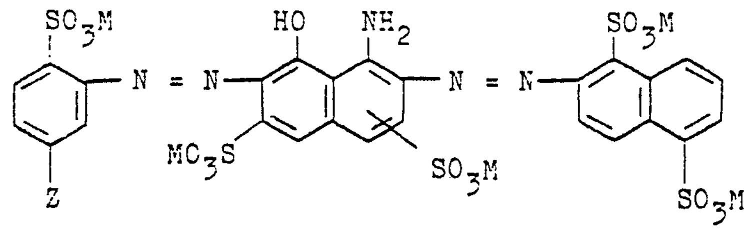

(14)

entsprechen, in welcher M und Z die obengenannten Bedeutungen haben.

In diesen Verbindungen der allgemeinen Formeln (8) bis (14) ist der Formelrest Y bevorzugt die β-Sulfatoethyl-Gruppe ; desweiteren ist in diesen Verbindungen der durch $R^2$, $R^3$ und Z substituierte Phenylrest insbesondere ein Rest entsprechend einer der früher genannten Formeln (4a) bis (4e).

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Eingeschlossen ist hierbei Massefärbung, wie bspw. von Folien aus Polyamid. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern ; regenerierte Cellulosefasern sind beispielsweise Zellwolle und Viskosekunstseide. Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstechniken applizieren und fixieren, so beispielsweise, indem man die Disazoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 40 und 105 °C, gegebenenfalls bei Temperaturen bis zu 130 °C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls gute Farbausbeuten und ein guter Farbaufbau erhalten, wobei durch Verweilen bei Raumtemperatur oder erhöhter Temperatur, beispielsweise bis zu etwa 60 °C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mittels einer die erfindungsgemäße Verbindung und Natriumbicarbonat oder ein anderes säurebindendes Mittel enthaltenden Druckpaste und anschließendes Dämpfen bei 100 bis 103 °C, oder zweiphasig, beispielsweise durch Bedrucken mittels einer die erfindungsgemäße Verbindung enthaltenden neutralen oder schwach sauren Druckpaste und anschließendes Fixieren der erfindungsgemäßen Verbindung entweder durch Hindurchführen des bedruckten Materials durch ein heißes alkali- und elektrolythaltiges Bad oder durch Überklotzen mit einer alkalischen elektrolythaltigen Klotzflotte und

anschließendes Verweilen dieses überklotzten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200 °C. Bei der Fixierung mittels Wasserdampf kann neben dem üblichen Wasserdampf von 101 bis 103 °C auch überhitzter Dampf und Druckdampf von Temperaturen bis zu 160 °C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle von organischen oder anorganischen Säuren oder Verbindungen, die in der Hitze Alkali freisetzen. Insbesondere sind die Alkalimetallhydroxide und Alkalimetallsalze von schwach bis mittelstarken anorganischen oder organischen Säuren zu nennen, vorzugsweise deren Natrium- und Kaliumverbindungen. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemäßen Verbindungen (Farbstoffe) mit den säurebindenden Mitteln, gegebenenfalls unter Wärmeeinwirkung, werden diese chemisch an die Cellulosefaser gebunden ; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit auswaschen lassen.

Die mit den erfindungsgemäßen Verbindungen (Farbstoffen) hergestellten Färbungen und Drucke auf Cellulosematerialien besitzen eine hohe Farbstärke, gute Lichtechtheiten und gute bis sehr gute Naßechtheiten, wie beispielsweise gute bis sehr gute Waschechtheiten bei 60 bis 95 °C, auch in Gegenwart von Perboraten, saure und alkalische Walk-, Überfärbe- und Schweißechtheiten, gute bis sehr gute saure und alkalische Schweißechtheiten, eine hohe Dampfbeständigkeit, gute bis sehr gute Alkali-, Säure-, Wasser- und Seewasserechtheiten, desweiteren eine gute Plissierechtheit, Bügelechtheit und Reibechtheit. Ebenso besitzen sie eine sehr gute Säurelagerbeständigkeit (« acid fading ») beim Lagern von feuchten, noch Essigsäure enthaltendem gefärbtem Material (s. hierzu deutsche Auslegeschrift Nr. 23 22 236).

Besonders hervorzuheben sind die guten Naßlichtechtheiten der mit destilliertem Wasser oder Trinkwasser befeuchteten Färbungen und Drucke auf Cellulosefasermaterialien sowie deren alkalische Schweißlichtechtheit. Diesbezüglich sind die erfindungsgemäßen Farbstoffe den anfangs erwähnten bekannten und konstitutionell nächst vergleichbaren faserreaktiven Farbstoffen, die als Reaktivgruppe ebenfalls einen Monochlortriazin-Rest und eine faserreaktive Gruppe der Vinylsulfon-Reihe enthalten, in überraschender Weise überlegen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat, Natriumacetat und/oder Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40 °C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100 °C durchgeführt, jedoch können sie auch in geschlossenen Färbeapparaturen bei Temperaturen bis zu 106 °C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, farbstarke, echte Färbungen. Bei Anwendung von Färbetemperaturen von 100 bis 106 °C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Im Vergleich zu konstitutionell ähnlichen bekannten Farbstoffen zeigen sie in überraschender Weise einen sehr guten Farbaufbau, wobei die brillante Nuance in tiefen Tönen erhalten bleibt. Darüber hinaus zeigen sie eine gute Kombinierbarkeit mit anderen faserreaktiven Wollfarbstoffen, die ein überraschend egales Färben der Faser ermöglichen. Ebenso läßt sich Material aus Wollfasern unterschiedlicher Provenienz mit der erfindungsgemäßen Verbindung egal färben. Zur Verbesserung des Egalisierverhaltens kann gegebenenfalls ein übliches Egalisierhilfsmittel, wie beispielsweise N-Methyltaurin, zugesetzt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben ; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

## Beispiel 1

a) Eine Lösung von 18 Teilen 1,3-Diaminobenzol-4-sulfonsäure in einem Gemisch aus 20 Teilen Wasser und 18 Volumenteilen einer wäßrigen 5n-Natronlauge wird unter Rühren bei einem pH-Wert zwischen 4 und 5 allmählich in eine Suspension von 18 Teilen Cyanurchlorid in 60 Teilen Eiswasser gegeben ; die Reaktionstemperatur wird durch Außenkühlung bei 5 bis 10 °C gehalten. Es wird unter diesen Reaktionsbedingungen noch zwei Stunden nachgerührt. Sodann gibt man unter Einhaltung eines pH-Wertes von 6 mittels verdünnter wäßriger Natriumcarbonatlösung eine Suspension von 42 Teilen 1-Nitro-2-(4'-aminophenylamino)-5-(β-sulfatoethylsulfonyl)-benzol in 50 Teilen Wasser hinzu, wobei man die Reaktionstemperatur allmählich auf 25 °C erhöht. Nach beendeter Kondensationsreaktion wird die erhaltene Lösung mit 18 Teilen einer 31 %igen wäßrigen Salzsäure sauer gestellt und durch Zugabe von Eis auf eine Temperatur von 0 bis 5 °C abgekühlt ; die Diazotierungsreaktion wird in üblicher Weise mit einer wäßrigen 1n-Natriumnitritlösung durchgeführt.

b) Die unter a) erhaltene Diazoniumsalz-Suspension wird in eine Lösung von 16 Teilen 1-Amino-8-hydroxynaphthalin-3,6-disulfonsäure in 200 Teilen Wasser eingetragen ; hierbei wird die Temperatur durch Außenkühlung bei 5 bis 10 °C gehalten und der pH nach Beendigung der sauren Kupplung mit verdünnter wäßriger Natriumcarbonatlösung auf einen Wert zwischen 5 und 6 eingestellt. Nach beendeter Kupplungsreaktion wird die erfindungsgemäße Disazoverbindung in üblicher Weise isoliert.

Es wird ein dunkelblaues, elektrolythaltiges Pulver des Natriumsalzes der Verbindung der Formel

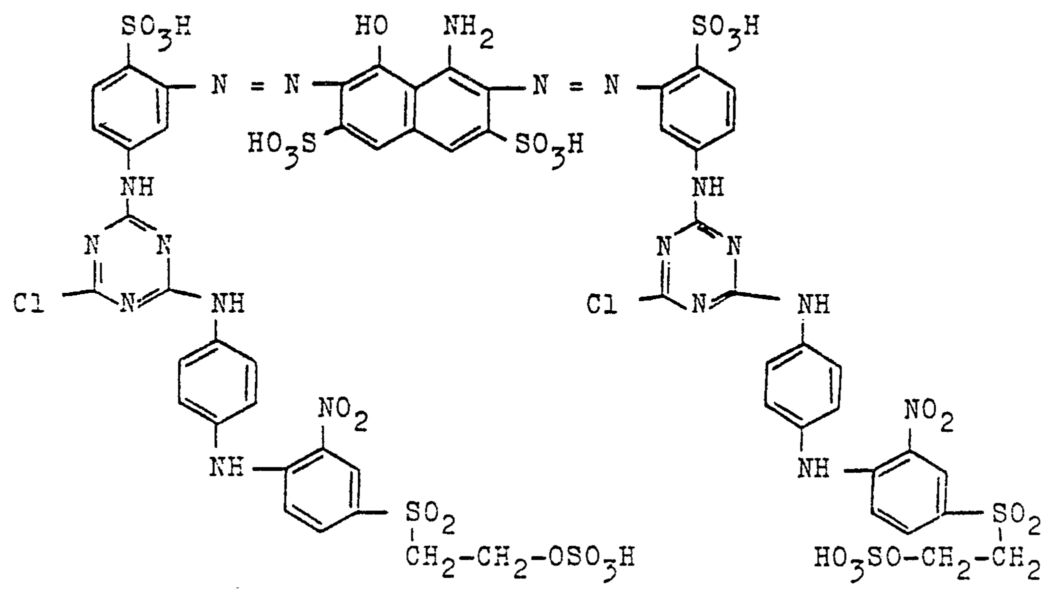

erhalten. Diese besitzt sehr gute faserreaktive Farbstoffeigenschaften, zeigt in wäßriger Lösung ein Absorptionsmaximum bei 605 nm und liefert nach den in der Technik üblichen Applikations- und Fixiermethoden für faserreaktive Farbstoffe auf den in der Beschreibung genannten Materialien, insbesondere auf Cellulosefasermaterialien, wie Baumwolle, farbstarke, grünstichig blaue Färbungen mit guten Echtheiten, wie insbesondere guten Naßechtheiten.

Beispiel 2

Man stellt analog der Verfahrensweise des Beispieles 1a) das sekundäre Kondensationsprodukt aus 1,4-Diaminobenzol-2-sulfonsäure, Cyanurchlorid und 1-Nitro-2-(4'-aminophenylamino)-5-(β-sulfatoethylsulfonyl)-benzol her und führt es in das Diazoniumsalz über. Die Diazoniumsalzsuspension wird sodann gemäß den Angaben des Beispieles 1b) mit der wäßrigen Lösung von 16 Teilen 1-Amino-3,6-disulfo-8-naphthol in 200 Teilen Wasser gekuppelt.

Die in Form des Natriumsalzes erhaltene erfindungsgemäße Disazoverbindung der Formel

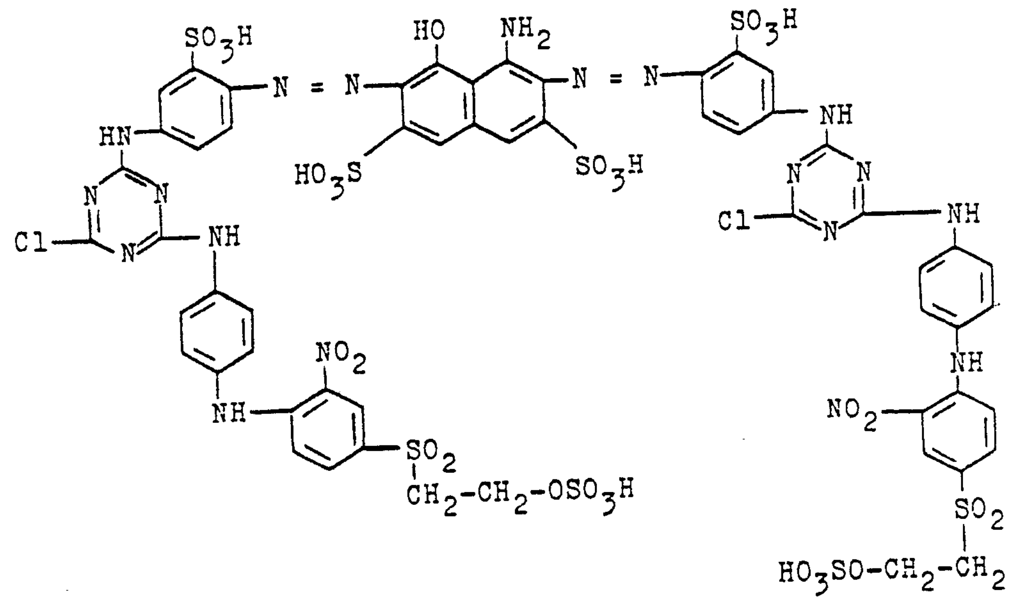

besitzt sehr gute faserreaktive Farbstoffeigenschaften, zeigt in wäßriger Lösung ein Absorptionsmaximum bei 629 nm und liefert insbesondere auf Cellulosefasermaterialien, wie Baumwolle, farbstarke blaustichig grüne Färbungen mit guten Echtheiten, von denen insbesondere die gute Chlorwasserechtheit hervorgehoben werden kann.

Beispiel 3

Zur Herstellung einer erfindungsgemäßen Disazoverbindung verfährt man gemäß den Angaben des Beispieles 1, verwendet jedoch anstelle von 1-Nitro-2-(4'-aminophenylamino)-5-(β-sulfatoethylsulfonyl)-benzol das 1-Nitro-4-(4'-aminophenylamino)-5-(β-sulfatoethylsulfonyl)-benzol in äquivalenter Menge, das in analoger Weise zum Beispiel 1 in das sekundäre Kondensationsprodukt aus Cyanurchlorid und dem Phenylendiamin übergeführt und diazotiert wird. Die in Form des Natriumsalzes erhaltene erfindungsgemäße Disazoverbindung besitzt ebenfalls sehr gute faserreaktive Farbstoffeigenschaften, zeigt in wäßriger Lösung ein Absorptionsmaximum bei 603 nm und färbt insbesondere Baumwolle in farbstarken, echten grünstichig blauen Farbtönen.

Beispiel 4

Zur Herstellung einer erfindungsgemäßen Disazoverbindung verfährt man gemäß den Angaben des Beispieles 3, verwendet jedoch anstelle der 1,3-Diaminobenzol-4-sulfonsäure die 1,4-Diaminobenzol-2-sulfonsäure, die in analoger Weise zum Beispiel 1 in das sekundäre Kondensationsprodukt aus Cyanurchlorid und dem Phenylendiamin übergeführt und diazotiert wird, in äquivalenter Menge. Die in Form des Natriumsalzes erhaltene erfindungsgemäße Disazoverbindung besitzt ebenfalls sehr gute faserreaktive Farbstoffeigenschaften, zeigt in wäßriger Lösung ein Absorptionsmaximum bei 625 nm und färbt insbesondere Baumwolle in farbstarken, echten blaustichig grünen Farbtönen.

Beispiele 5 bis 41

In den nachfolgenden Tabellenbeispielen sind weitere erfindungsgemäße Disazoverbindungen entsprechend einer allgemeinen Formel (A)

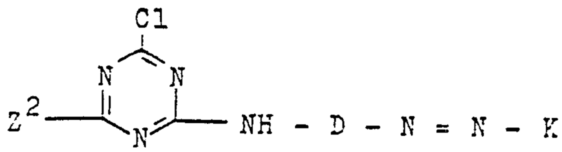

(A)

beschrieben, in welcher D dem Rest des Phenylendiamins der Diazokomponente, $Z^2$ dem Aminorest des Aminonitrodiphenylamins der in der Beschreibung genannten allgemeinen Formel (6) und K dem Rest der schwach sauer bis neutral kuppelnden Kupplungskomponente H—K entspricht ; diese als Kupplungskomponente dienende Monoazoverbindung H—K wird gemäß den Angaben der Beschreibung durch saure Kupplung der 1-Amino-8-naphthol-3,6-disulfonsäure mit der aus ihr ersichtlichen Diazokomponente zuvor hergestellt ; ihre Zwischenisolierung vor der weiteren Kupplungsreaktion mit dem Diazoniumsalz des Amins der Formel (1b)

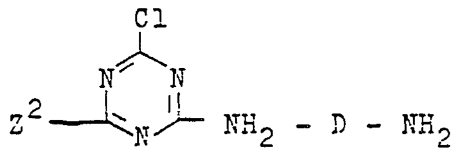

unter den erwähnten schwach sauren bis neutralen Kupplungsbedingungen kann unterbleiben.

Diese erfindungsgemäßen Disazoverbindungen besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, wie beispielsweise den im Beispiel 1 angegebenen Echtheiten, in dem in dem jeweiligen Tabellenbeispiel angegebenen Farbton auf Baumwolle.

(Siehe Tabellen Seite 13 ff.)

Disazoverbindung entsprechend Formel (A)

| Bsp. | Amino-diphenylamin $H-Z^2$ | Rest -D- entspr. Diamin $H_2N-D-NH_2$ | Kupplungskomponente H-K | Farbton |
|---|---|---|---|---|
| 5 | 1-Nitro-2-(4'-aminophenylamino)-5-(ß-sulfatoethylsulfonyl)-benzol | 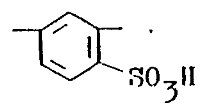 | 1-Amino-2-(4'-sulfophenylazo)-8-naphthol-3,6-disulfonsäure | blau |
| 6 | dito | dito | 1-Amino-2-(1',5'-disulfonaphthyl-2'-azo)-8-naphthol-3,6-disulfonsäure | blau |
| 7 | dito | dito | 1-Amino-2-(4'-sulfatoethylsulfonyl-phenylazo)-8-naphthol-3,6-disulfonsäure | blau |
| 8 | dito | 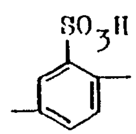 | 1-Amino-2-(4'-sulfophenylazo)-8-naphthol-3,6-disulfonsäure | blau |
| 9 | dito | dito | 1-Amino-2-(1',5'-disulfonaphthyl-2'-azo)-8-naphthol-3,6-disulfonsäure | blau |
| 10 | dito | dito | 1-Amino-2-(4'-sulfatoethylsulfonyl-phenylazo)-8-naphthol-3,6-disulfonsäure | blau |
| 11 | dito | 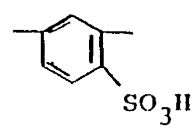 | 1-Amino-2-(3',6',8'-trisulfonaphthyl-2'-azo)-8-naphthol-3,6-disulfonsäure | blau |

Disazoverbindung entsprechend Formel (A) (Fortsetzung)

| Bsp. | Amino-diphenylamin $H-Z^2$ | Rest -D- | Kupplungskomponente H-K | Farbton |
|---|---|---|---|---|
| 12 | 1-Nitro-2-(4'-aminophenylamino)-5-(ß-sulfatoethylsulfonyl)-benzol | 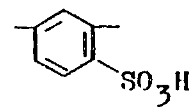 | 1-Amino-2-(2'-chlor-5'-sulfo-phenylazo)-8-naphthol-3,6-disulfonsäure | blau |
| 13 | dito | dito | 1-Amino-2-(phenylazo)-8-naphthol-3,6-disulfonsäure | blau |
| 14 | dito | 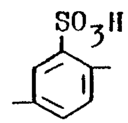 | 1-Amino-2-(3',6',8'-trisulfonaphthyl-2'-azo)-8-naphthol-3,6-disulfonsäure | blau |
| 15 | dito | dito | 1-Amino-2-(2'-chlor-5'-sulfo-phenylazo)-8-naphthol-3,6-disulfonsäure | blau |
| 16 | dito | dito | 1-Amino-2-(phenylazo)-8-naphthol-3,6-disulfonsäure | blau |
| 17 | dito | 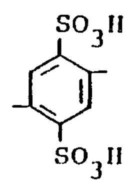 | 1-Amino-2-(4'-sulfo-phenylazo)-8-naphthol-3,6-disulfonsäure | blau |
| 18 | 1-Nitro-4-(4'-aminophenylamino)-5-(ß-sulfatoethylsulfonyl)-benzol | dito | 1-Amino-2-(4'-sulfophenylazo)-8-naphthol-3,6-disulfonsäure | blau |

Disazoverbindung entsprechend Formel (A) (Fortsetzung)

| Bsp. | Amino-diphenylamin $H-Z^2$ | Rest -D- | Kupplungskomponente H-K | Farbton |
|---|---|---|---|---|
| 19 | 1-Nitro-2-(4'-amino-3'-sulfo-phenylamino)-5-(ß-sulfatoethylsulfonyl)-benzol | 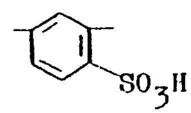 | 1-Amino-2-(4'-sulfophenylazo)-8-naphthol-3,6-disulfonsäure | blau |
| 20 | dito | dito | 1-Amino-2-(4'-sulfophenylazo)-8-naphthol-4,6-disulfonsäure | blau |
| 21 | dito | 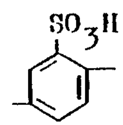 | 1-Amino-2-(4'-sulfophenylazo)-8-naphthol-3,6-disulfonsäure | blau |
| 22 | 1-Nitro-2-(4'-aminophenylamino)-5-ß-sulfatoethylsulfonyl)-benzol | 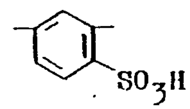 | 1-Amino-2-(4'-sulfophenylazo)-8-naphthol-4,6-disulfonsäure | blau |
| 23 | dito | dito | 1-Amino-2-(1',5'-disulfonaphthyl-2'-azo)-8-naphthol-4,6-disulfonsäure | blau |
| 24 | dito | dito | 1-Amino-2-(4'-ß-sulfatoethylsulfonyl-phenylazo)-8-naphthol-4,6-disulfonsäure | blau |
| 25 | dito | 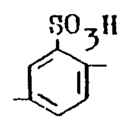 | dito | blau |
| 26 | dito | dito | 1-Amino-2-(4'-sulfophenylazo)-8-naphthol-4,6-disulfonsäure | blau |

Disazoverbindung entsprechend Formel (A) (Fortsetzung)

| Bsp. | Amino-diphenylamin $H-Z^2$ | Rest -D- ist | Kupplungskomponente H-K | Farbton |
|---|---|---|---|---|
| 27 | 1-Nitro-2-(4'-aminophenyl-amino)-5-ß-sulfatoethylsul-fonyl)-benzol | 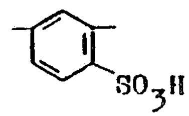 | 1-Amino-2-(2',5'-disulfo-phenylazo)-8-naphthol-3,5-disulfonsäure | blau |
| 28 | dito | 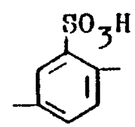 | dito | blau |
| 29 | dito | dito | 1-Amino-2-(2',5'-disulfo-phenylazo)-8-naphthol-4,6-disulfonsäure | blau |
| 30 | dito | 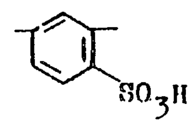 | dito | blau |
| 31 | 1-Nitro-2-(4'-amino-3'-sul-fophenylamino)-5-(ß-sulfato-ethylsulfonyl)-benzol | dito | 1-Amino-2-(2',5'-disulfo-phenylazo)-8-naphthol-3,6-disulfonsäure | blau |
| 32 | dito | dito | 1-Amino-2-(3'-ß-sulfato-ethylsulfonyl-phenylazo)-8-naphthol-3,6-disulfonsäure | blau |
| 33 | dito | dito | 1-Amino-2-(2'-carboxy-5'-ß-sulfatoethylsulfonyl-phenyl-azo)-8-naphthol-3,6-disul-fonsäure | blau |

Disazoverbindung entsprechend Formel (A) (Fortsetzung)

| Bsp. | Amino-diphenylamin $H-Z^2$ | Rest -D- | Kupplungskomponente H-K | Farbton |
|---|---|---|---|---|
| 34 | 1-Nitro-2-(4'-amino-3'-sulfophenylamino)-5-(ß-sulfatoethylsulfonyl)-benzol | 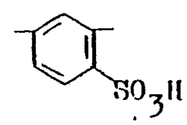 | 1-Amino-2-(2'-chlor-5'-ß-sulfatoethylsulfonyl-phenylazo)-ß-naphthol-3,6-disulfonsäure | blau |
| 35 | dito | dito | 1-Amino-2-(2'-methoxy-4'-ß-sulfatoethylsulfonyl-5'-methyl-phenylazo)-ß-naphthol-3,6-disulfonsäure | blau |
| 36 | dito | dito | 1-Amino-2-(2',5'-dimethoxy-4'-ß-sulfatoethylsulfonyl-phenylazo)-ß-naphthol-3,6-disulfonsäure | blau |
| 37 | dito | dito | 1-Amino-2-(2'-methoxy-5'-ß-sulfatoethylsulfonyl-phenylazo)-ß-naphthol-3,6-disulfonsäure | blau |
| 38 | dito | dito | 1-Amino-2-(6'-ß-sulfatoethylsulfonyl-naphthyl-2'-azo)-ß-naphthol-3,6-disulfonsäure | blau |
| 39 | dito | dito | 1-Amino-2-(8'-ß-sulfatoethylsulfonyl-naphthyl-2'-azo)-ß-naphthol-3,6-disulfonsäure | blau |

Disazoverbindung entsprechend Formel (A) (Fortsetzung)

| Bsp. | Amino-diphenylamin $H-Z^2$ | Rest -D- ist | Kupplungskomponente H-K | Farbton |
|---|---|---|---|---|
| 40 | 1-Nitro-2-(4'-amino-3'-sulfophenylamino)-5-(ß-sulfatoethylsulfonyl)-benzol | 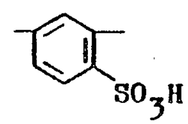 | 1-Amino-2-(2'-brom-4'-ß-sulfatoethylsulfonyl-phenylazo)-8-naphthol-3,6-disulfonsäure | blau |
| 41 | dito | dito | 1-Amino-2-(2'-sulfo-4'-sulfatoethylsulfonyl-phenylazo)-8-naphthol-3,6-disulfonsäure | blau |

**Patentansprüche**

1. Wasserlösliche Disazoverbindung der allgemeinen Formel (1)

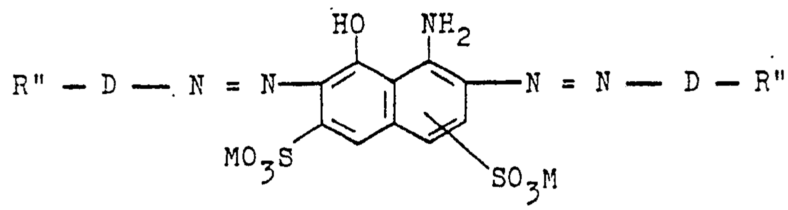 (1)

in welcher bedeuten :

M ist ein Wasserstoffatom oder ein Alkalimetall oder das Äquivalent eines Erdalkalimetalls ;

R″ ist ein Wasserstoffatom oder ein Rest der allgemeinen Formel (2)

$$Y{-}SO_2{-} \qquad (2)$$

in welcher

Y die Vinylgruppe oder eine β-Thiosulfatoethyl-, β-Phosphatoethyl-, β-Chlorethyl- oder β-Sulfatoethyl-Gruppe ist,

oder

R″ ist ein Rest Z der nachstehend angegebenen und definierten allgemeinen Formel (3), wobei beide R″ zueinander gleiche oder voneinander verschiedene Bedeutungen besitzen können, jedoch mindestens eines der beiden R″ zwingend eine Gruppe der allgemeinen Formel (3) ist ;

Z ist ein Rest der allgemeinen Formel (3)

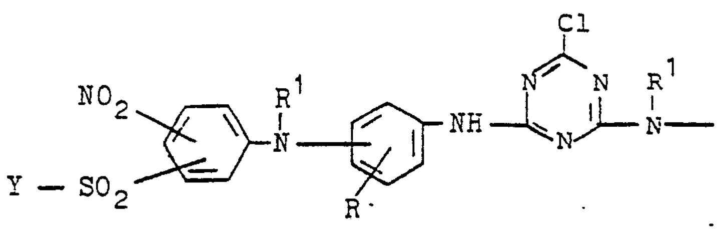 (3)

in welcher

$R^1$ für ein Wasserstoffatom oder eine Alkylgruppe von 1 bis 4 C-Atomen steht, die durch einen oder zwei Substituenten aus der Gruppe Acetylamino, Hydroxy, Sulfato, Alkoxy von 1 bis 4 C-Atomen, Sulfo und Carboxy substituiert sein kann, wobei beide $R^1$ zueinander gleiche oder voneinander verschiedene Bedeutungen besitzen können,

R ein Wasserstoffatom oder eine Sulfogruppe bedeutet und

Y die Vinylgruppe oder eine β-Thiosulfatoethyl-, β-Phosphatoethyl-, β-Chlorethyl- β-Sulfatoethyl-Gruppe ist,

wobei die Gruppen Y in Formeln (2) und (3) zueinander gleiche oder voneinander verschiedene Bedeutungen besitzen können ;

D bedeutet zusammen mit R″ gleich einem Wasserstoffatom einen Phenylrest, der durch Substituenten substituiert sein kann, die der Gruppe der Substituenten Alkyl von 1 bis 4 C-Atomen, Alkoxy von 1 bis 4 C-Atomen, Carboxy, Alkanoylamino von 2 bis 5 C-Atomen, Benzoylamino, Sulfobenzoylamino, Phenylamino, Sulfophenylamino, Carbamoyl, durch Alkyl von 1 bis 4 C-Atomen mono- oder disubstituiertes Carbamoyl, Sulfamoyl, durch Alkyl von 1 bis 4 C-Atomen mono- oder disubstituiertes Sulfamoyl, N-Phenylsulfamoyl, N-Phenyl-N-($C_1$-$C_4$-alkyl)-sulfamoyl, Cyan, Nitro, Chlor, Brom, Fluor, Trifluormethyl, Hydroxy und Sulfo angehören, oder

D bedeutet zusammen mit R″ = H einen Naphthylrest, der durch Substituenten substituiert sein kann, die der Gruppe der Substituenten Sulfo, Carboxy, Methyl, Ethyl, Methoxy, Ethoxy, Alkanoylamino von 2 bis 5 C-Atomen, Benzoylamino, Chlor, Hydroxy und Nitro angehören, oder

D ist im Falle, daß R″ für eine Gruppe der allgemeinen Formel (2) steht, ein Phenylenrest, der durch 1 oder 2 Substituenten substituiert sein kann, die der Gruppe Alkyl von 1 bis 4 C-Atomen, Alkoxy von 1 bis 4 C-Atomen, Carboxy, Chlor, Brom, Fluor, Trifluormethyl und Sulfo angehören, oder ist ein Naphthylenrest, der durch 1 oder 2 Sulfogruppen substituiert sein kann, oder

D ist im Falle, daß R″ eine Gruppe der allgemeinen Formel (3) bedeutet, ein Phenylenrest, der durch 1 oder 2 Substituenten substituiert sein kann, die der Gruppe der Substituenten Alkyl von 1 bis 4 C-Atomen, Alkoxy von 1 bis 4 C-Atomen, Chlor und Sulfo angehören.

2. Verbindungen nach Anspruch 1, dadurch gekennzeichnet, daß im Falle daß R″ ein Rest Z der allgemeinen Formel (3) ist, D ein Phenylenrest ist, der durch keine weiteren Substituenten substituiert ist oder durch 1 Alkylgruppe von 1 bis 4 C-Atomen, 1 Alkoxygruppe von 1 bis 4 C-Atomen oder durch 1 oder 2 Sulfogruppen substituiert ist.

3. Verfahren zur Herstellung der in Anspruch 1 genannten und definierten Disazoverbindungen der allgemeinen Formel (1), dadurch gekennzeichnet, daß man eine Diazoniumverbindung eines Amins der allgemeinen Formel (5)

$$H_2N{-}D{-}R'' \qquad (5)$$

in welcher D und R″ die in Anspruch 1 genannten Bedeutungen haben, mit 1-Amino-3,6-disulfo-8-hydroxy-naphthalin oder 1-Amino-4,6-disulfo-8-hydroxy-naphthalin in äquimolaren oder praktisch äquimolaren Mengen bei einem pH-Wert zwischen 0 und 3,5 kuppelt und die so gebildete Monoazoverbindung anschließend mit einer weiteren Diazoniumverbindung eines Amins der oben genannten und definierten allgemeinen Formel (5) in äquimolarer oder praktisch äquimolarer Menge bei einem pH-Wert zwischen 4,5 bis 7,5, kuppelt, wobei mindestens eines der beiden eingesetzten Diazoniumsalze der Amine (5) gemäß der Definition der Disazoverbindungen der allgemeinen Formel (1) eine Gruppe der allgemeinen Formel (3) zwingend enthält.

4. Verwendung der in Anspruch 1 genannten und definierten Verbindungen der allgemeinen Formel (1) oder der nach Anspruch 3 hergestellten Verbindungen der allgemeinen Formel (1) als Farbstoffe.

5. Verwendung nach Anspruch 4 zum Färben (Colorieren) von hydroxy- und/oder carbonamidgruppenhaltigem Material, insbesondere Fasermaterial.

6. Verfahren zum Färben (Colorieren) von hydroxy- und/oder carbonamidgruppenhaltigem Material, vorzugsweise Fasermaterial, bei welchem man einen Farbstoff auf das Material aufbringt oder in das Material einbringt und ihn mittels Wärme und/oder in Gegenwart eines säurebindenden Mittels fixiert, dadurch gekennzeichnet, daß man als Farbstoff eine Verbindung der in Anspruch 1 genannten und definierten allgemeinen Formel (1) oder eine nach Anspruch 3 hergestellte Verbindung der allgemeinen Formel (1) einsetzt.

## Claims

1. A water-soluble disazo compound of the general formula (1)

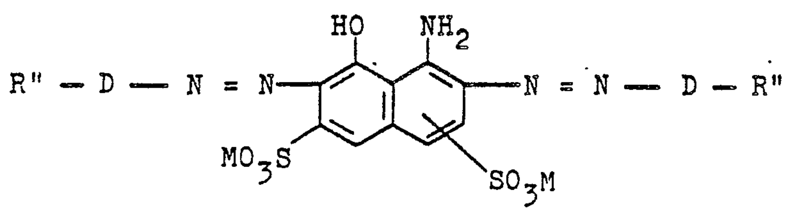

(1)

in which :

M is a hydrogen atom or an alkali metal or one equivalent of an alkaline earth metal ;

R″ is a hydrogen atom or a radical of the general formula (2)

$$Y{-}SO_2{-} \qquad (2)$$

in which

Y is the vinyl group or a β-thiosulfatoethyl, β-phosphatoethyl, β-chloroethyl or β-sulfatoethyl group, or

R″ is a radical Z of the general formula (3) shown and defined hereinafter,

it being possible for the two R″ to be identical to or different from one another, but at least one of the two R″ mandatorily being a group of the general formula (3) ;

Z is a radical of the general formula (3)

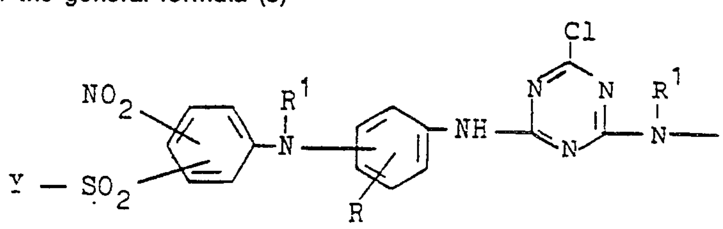

(3)

in which

$R^1$ stands for a hydrogen atom or an alkyl group of 1 to 4 carbon atoms which can be substituted by one or two substituents from the group consisting of acetylamino, hydroxyl, sulfato, alkoxy of 1 to 4 carbon atoms, sulfo and carboxyl, it being possible for the two $R^1$ to be identical to or different from each other,

R denotes a hydrogen atom or a sulfo group and

Y is the vinyl group or a β-thiosulfatoethyl, β-phosphatoethyl, β-chloroethyl or β-sulfatoethyl group, it being possible for the Y groups in the formulae (2) and (3) to be identical to or different from each other ;

D denotes together with R″ equal to a hydrogen atom a phenyl radical which can be substituted by substituents, which belong to the group of substituents consisting of alkyl of 1 to 4 carbon atoms, alkoxy of 1 to 4 carbon atoms, carboxyl, alkanoylamino of 2 to 5 carbon atoms, benzoylamino, sulfobenzoylamino, phenylamino, sulfophenylamino, carbamoyl, carbamoyl which is monosubstituted or disubstituted by alkyl of 1 to 4 carbon atoms, sulfamoyl, sulfamoyl which is monosubstituted or disubstituted by alkyl of 1 to 4 carbon atoms, N-phenylsulfamoyl, N-phenyl-N-($C_1$-$C_4$-alkyl)-sulfamoyl, cyano, nitro, chlorine, bromine, fluorine, trifluoromethyl, hydroxyl and sulfo, or

D denotes together with R″ = H a naphthyl radical which can be substituted by substituents which belong to the group of substituents consisting of sulfo, carboxyl, methyl, ethyl, methoxy, ethoxy, alkanoylamino of 2 to 5 carbon atoms, benzoylamino, chlorine, hydroxyl and nitro, or

D is in the case where R″ stands for a group of the general formula (2) a phenylene radical which can be substituted by 1 or 2 substituents which belong to the group consisting of alkyl of 1 to 4 carbon atoms, alkoxy of 1 to 4 carbon atoms, carboxyl, chlorine, bromine, fluorine, trifluoromethyl and sulfo, or is a naphthylene radical which can be substituted by 1 or 2 sulfo groups, or

D is in the case where R″ denotes a group of the general formula (3) a phenylene radical which can be substituted by 1 or 2 substituents which belong to the group of substituents consisting of alkyl of 1 to 4 carbon atoms, alkoxy of 1 to 4 carbon atoms, chlorine and sulfo.

2. A compound as claimed in claim 1, wherein in the case where R″ is a radical Z of the general formula (3) D is a phenylene radical which is substituted by no further substituents or is substituted by 1 alkyl group of 1 to 4 carbon atoms, 1 alkoxy group of 1 to 4 carbon atoms or by 1 or 2 sulfo groups.

3. A process for preparing the disazo compounds of the general formula (1) mentioned and defined in claim 1, which comprises coupling a diazonium compound of an amine of the general formula (5)

$$H_2N—D—R'' \qquad (5)$$

in which D and R″ have the meanings mentioned in claim 1, with 1-amino-3,6-disulfo-8-hydroxynaphthalene or 1-amino-4,6-disulfo-8-hydroxynaphthalene in equimolar or practically equimolar amounts at a pH value between 0 and 3.5 and then coupling the monoazo compound as formed with a further diazonium compound of an amine of the general formula (5) mentioned and defined above in an equimolar or practically equimolar amount at a pH value between 4.5 and 7.5, and at least one of the two diazonium salts used of the amines (5) mandatorily contains in accordance with the definition of the disazo compounds of the general formula (1) a group of the general formula (3).

4. Use of the compounds of the general formula (1) mentioned and defined in claim 1 or of the compounds of the general formula (1) prepared as claimed in claim 3, as dyes.

5. Use as claimed in claim 4, for coloring hydroxyl- and/or carboxamido-containing material, in particular fiber material.

6. A process for coloring hydroxyl- and/or carboxamido-containing material, preferably fiber material, in which a dye is applied to or incorporated into the material and is fixed by means of heat and/or in the presence of an acid-binding agent, which comprises using as the dye a compound of the general formula (1) mentioned and defined in claim 1 or a compound of the general formula (1) prepared as claimed in claim 3.

**Revendications**

1. Composé disazoïque hydrosoluble qui répond à la formule générale (1) :

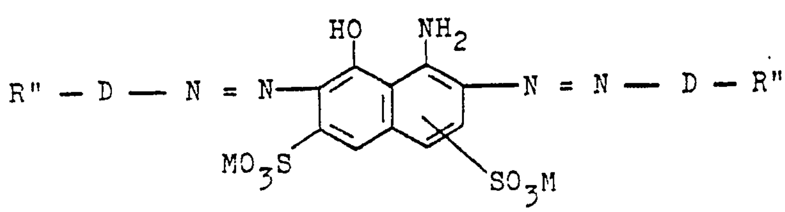

(1)

dans laquelle :

M représente un atome d'hydrogène ou un métal alcalin ou l'équivalent d'un métal alcalino-terreux,

R″ représente un atome d'hydrogène ou un radical répondant à la formule générale (2) :

$$Y—SO_2— \qquad (2)$$

dans laquelle :

Y représente un radical vinyle ou un radical thiosulfato-2 éthyle, phosphato-2 éthyle, chloro-2 éthyle ou sulfato-2 éthyle,

ou

R″ représente un radical Z répondant à la formule générale qui est représentée et définie ci-dessous, les deux symboles R″ ayant la même signification ou des significations différentes mais au moins l'un des deux représentant obligatoirement un radical de formule générale (3),

Z représente un radical répondant à la formule générale (3) :

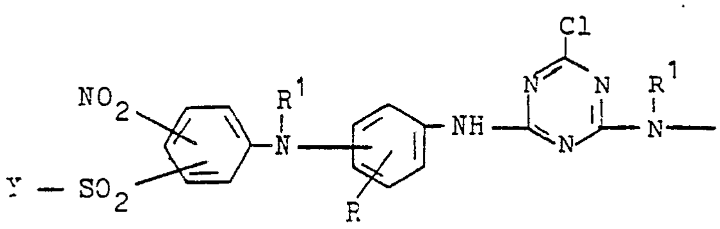

(3)

dans laquelle :

$R^1$ représente un atome d'hydrogène ou un radical alkyle qui contient de 1 à 4 atomes de carbone et qui peut porter un ou deux substituants pris dans l'ensemble constitué par les radicaux acétylamino, hydroxy, sulfato, alcoxy en $C_1$-$C_4$, sulfo et carboxy, les deux symboles $R^1$ ayant les mêmes significations ou des significations différentes,

R représente un atome d'hydrogène ou un radical sulfo et

Y représente un radical vinylsulfonyle ou un radical thio-sulfato-2 éthyle, phosphato-2 éthyle, chloro-2 éthyle ou sulfato-2 éthyle, les symboles Y présents dans les formules (2) et (3) ayant la même signification ou des significations différentes,

D représente avec R″ — celui-ci désignant alors un atome d'hydrogène — un radical phényle qui peut porter des substituants pris dans l'ensemble constitué par les alkyles en $C_1$-$C_4$, les alcoxy en $C_1$-$C_4$, le carboxy, les alcanoylamino en $C_2$-$C_5$, le benzoylamino, les sulfo-benzoylamino, le phénylamino, les sulfo-phénylamino, le carbamoyle, les carbamoyles porteurs d'un ou de deux alkyles en $C_1$-$C_4$, le sulfamoyle, les sulfamoyles porteurs d'un ou de deux alkyles en $C_1$-$C_4$, le N-phényl-sulfamoyle, les N-phényl-N-($C_1$-$C_4$-alkyl)-sulfamoyles, le cyano, le nitro, le chlore, le brome, le fluor, le trifluorométhyle, l'hydroxy et le sulfo, ou

D représente avec R″ — celui-ci désignant alors H — un radical naphtyle qui peut porter des substituants pris dans l'ensemble constitué par le sulfo, le carboxy, le méthyle, l'éthyle, le méthoxy, l'éthoxy, les alcanoylamino en $C_1$-$C_5$, le benzoylamino, le chlore, l'hydroxy et le nitro, ou

D représente, dans le cas où R″ désigne un radical de formule (2), un radical phénylène qui peut porter un ou deux substituants appartenant à l'ensemble constitué par les alkyles en $C_1$-$C_4$, les alcoxy en $C_1$-$C_4$, le carboxy, le chlore, le brome, le fluor, le trifluorométhyle et le sulfo, ou un radical naphtylène et qui peut porter un ou deux radicaux sulfo, ou

D représente, dans le cas où R″ désigne un radical de formule générale (3), un radical phénylène qui peut porter un ou deux substituants appartenant à l'ensemble constitué par les alkyles en $C_1$-$C_4$, les alcoxy en $C_1$-$C_4$, le chlore et le sulfo.

2. Composés selon la revendication 1 caractérisés en ce que, dans le cas où R″ désigne un radical Z de formule générale (3), le symbole D représente un radical phénylène qui ne porte pas d'autres substituants ou qui porte un alkyle en $C_1$-$C_4$, un alcoxy en $C_1$-$C_4$ ou un ou deux radicaux sulfo.

3. Procédé pour préparer les composés disazoïques répondant à la formule générale (1) qui a été représentée et définie à la revendication 1, procédé caractérisé en ce qu'on copule, à un pH compris entre 0 et 3,5, un composé de diazonium dérivant d'une amine répondant à la formule générale (5) :

$$H_2N—D—R'' \qquad (5)$$

dans laquelle D et R″ ont les significations données à la revendication 1, avec l'amino-1 disulfo-3,6 hydroxy-8 naphtalène ou l'amino-1 disulfo-4,6 hydroxy-8 naphtalène, en des quantités équimolaires ou pratiquement équimolaires, puis on copule, à un pH compris entre 4,5 et 7,5, le composé mono-azoïque ainsi formé avec un autre composé de diazonium dérivant d'une amine répondant à la formule générale (5) représentée et définie ci-dessus, en une quantité équimolaire ou pratiquement équimolaire, au moins l'un des deux sels de diazoniums des amines (5) dont il est fait usage contenant obligatoirement, conformément à la définition des composés disazoïques de formule générale (1), un radical de formule générale (3).

4. Application des composés de formule générale (1) définis à la revendication 1, ou des composés de formule générale (1) préparés selon la revendication 3, comme colorants.

5. Application selon la revendication 4 pour la teinture (coloration) de matières contenant des radicaux hydroxy et/ou des radicaux carbamoyles, plus particulièrement des matières fibreuses de ce type.

6. Procédé pour teindre (colorer) des matières contenant des radicaux hydroxy et/ou des radicaux carbamoyles, de préférence des matières fibreuses de ce genre, selon lequel on applique un colorant sur la matière, ou on introduit un colorant dans la matière, et on le fixe par la chaleur et/ou en présence d'un accepteur d'acides, ledit procédé étant caractérisé en ce qu'on utilise comme colorant un composé répondant à la formule générale (1) qui a été représentée et définie à la revendication 1, ou un composé de formule générale (1) qui a été préparé selon la revendication 3.